# EUROPEAN PATENT APPLICATION

(11) **EP 4 510 712 A1**
(43) Date of publication of application: **19.02.2025**
(21) Application number: 22937372.5
(22) Date of filing: 11.04.2022
(51) Int. Cl.: H04W 52/02, H04W 24/02

(54) **TERMINAL, BASE STATION, AND COMMUNICATION METHOD**

(71) Applicant: NTT DOCOMO, INC., Tokyo 100-6150 (JP)
(72) Inventor: OHARA, Tomoya, Tokyo 100-6150 (JP); HIGUCHI, Syouichi, Tokyo 100-6150 (JP); OKAMURA, Masaya, Tokyo 100-6150 (JP); SHIMA, Kousuke, Tokyo 100-6150 (JP); NAKAMURA, Takuma, Tokyo 100-6150 (JP)
(74) Representative: Hoffmann Eitle
(86) International application number: PCT/JP2022/017544
(87) International publication number: WO 2023/199392

(57) **Abstract**

A terminal includes: a receiving unit configured to receive a downlink signal based on discontinuous reception or cyclical monitoring of a downlink control signal; and a control unit configured to switch a configuration of the discontinuous reception or the cyclical monitoring when a condition related to quality of wireless communication is satisfied.

## Description

### FIELD OF THE INVENTION

The present invention relates to a terminal, a base station, and a communication method in a wireless communication system.

### BACKGROUND OF THE INVENTION

The requirements of "New Radio" (NR) (also referred to as "5G"), which is a successor system of long-term evolution (LTE), include large system capacity, high data transmission speed, low latency, simultaneous access from multiple terminals, low cost, power saving, and so forth, and a variety of technologies are under study to meet these requirements (see, for example, non-patent document 1).

Furthermore, studies have begun on 6G as the next-generation wireless communication scheme following 5G, and it is expected that 6G will achieve radio quality that exceeds that of 5G. For example, in relationship to 6G, studies are underway to achieve even greater capacity, use of new frequency bands, lower latency, higher reliability, greater reduction in power consumption, and expansion of coverage to new areas (higher altitudes, oceans, (outer) space, etc.) using non-terrestrial networks.

### RELATED-ART DOCUMENTS

### NON-PATENT DOCUMENTS

Non-Patent Document 1: 3GPP TS 38.300 V16.8.0 (2021-12)

### SUMMARY OF THE INVENTION

### TECHNICAL PROBLEM

For XR-specific power-saving techniques, function enhancement of C-DRX and function enhancement of PDCCH monitoring are under study. Also, in communications with mobile devices, the quality of radio is expected to fall below the normal range, such as occurs in an HST environment (during high-speed traveling). Nevertheless, with existing techniques, it is difficult to allow a terminal located in an environment with poor radio quality to communicate well and save its power consumption at the same time.

The present invention has been made in view of the foregoing, and aims to allow, in a wireless communication system, a terminal located in an environment with poor radio quality to communicate well and save its power consumption at the same time.

### SOLUTION TO PROBLEM

The techniques disclosed herein provide a terminal. This terminal includes: a receiving unit configured to receive a downlink signal based on discontinuous reception or cyclical monitoring of a downlink control signal; and a control unit configured to switch a configuration of the discontinuous reception or the cyclical monitoring when a condition related to quality of wireless communication is satisfied.

### ADVANTAGEOUS EFFECTS OF INVENTION

The techniques disclosed herein make it clear how a terminal should behave when cross-cell UCI multiplexing is not supported.

### BRIEF DESCRIPTION OF THE DRAWINGS

[FIG. 1] FIG. 1 is a diagram for explaining a wireless communication system according to an embodiment of the present invention;
[FIG. 2] FIG. 2 is a diagram for explaining the switching of configurations according to an embodiment of the present invention;
[FIG. 3] FIG. 3 is a diagram for explaining the switching of the configuration of ON duration in CDRX mode according to an embodiment of the present invention;
[FIG. 4] FIG. 4 is a diagram that shows an example functional structure of a base station according to an embodiment of the present invention;
[FIG. 5] FIG. 5 is a diagram that shows an example functional structure of a terminal according to an embodiment of the present invention;

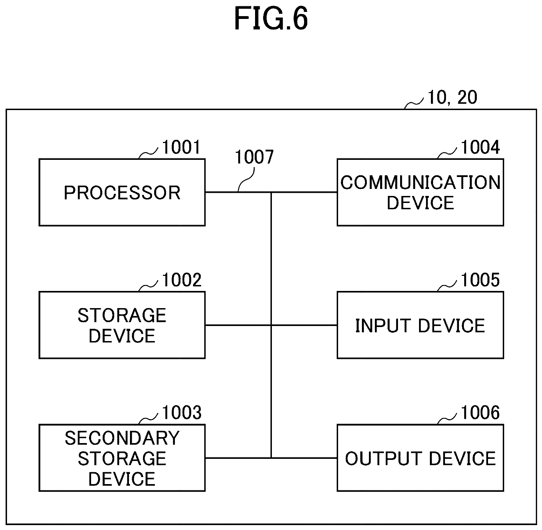

[FIG. 6] FIG. 6 is a diagram that shows an example hardware structure of a base station or a terminal according to an embodiment of the present invention; and
[FIG. 7] FIG. 7 is a diagram that shows an example structure of a vehicle according to an embodiment of the present invention.

### DETAILED DESCRIPTION OF THE PREFERRED EMBODIMENTS

Now, embodiments of the present invention will be described below with reference to the accompanying drawings. Note that the embodiments described below are only examples, and the applicability of the present invention is by no means limited to the following embodiments.

Existing techniques may be used as appropriate to operate the wireless communication system according to the embodiments of the present invention. Examples of these existing techniques include, but are not limited to, existing LTE. Also, unless otherwise specified, the term "LTE" as used herein has a broad meaning including LTE-Advanced and systems that emerged after LTE-Advanced (for example, NR).

Also, in the following description of embodiments of the present invention, terms that are used in existing LTE will be used, including synchronization signal (SS), primary SS (PSS), secondary SS (SSS), physical broadcast channel (PBCH), physical random access channel (PRACH), physical downlink control channel (PDCCH), physical downlink shared channel (PDSCH), physical uplink control channel (PUCCH), physical uplink shared channel (PUSCH), and so forth. This is for ease of description, and signals, functions, and so forth that are substantially the same as these may be referred to by other names. Also, in NR, the above terms correspond to NR-SS, NR-PSS, NR-SSS, NR-PBCH, NR-PRACH, and so forth. However, signals used in NR may not be always written with the prefix "NR-."

Also, according to the embodiments of the present invention, the duplex method may be time division duplex (TDD), frequency division duplex (FDD), or may be any other method (including, for example, flexible duplex).

Also, according to the embodiments of the present invention, when a radio parameter or the like is "configured," this may mean that a predetermined value is configured in advance (or "preconfigured"), or mean that a radio parameter or the like that is reported from a base station 10 or a terminal 20 is configured.

### (System structure)

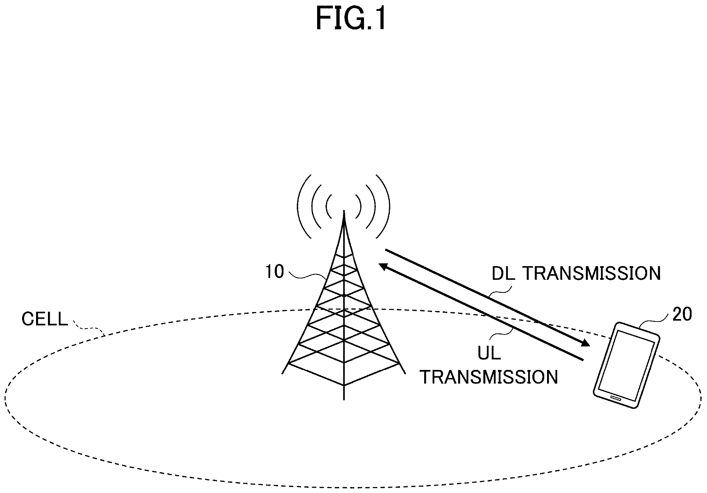

FIG. 1 is a diagram for explaining a wireless communication system according to an embodiment of the present invention. The wireless communication system according to an embodiment of the present invention includes a base station 10 and a terminal 20, as shown in FIG. 1. Although one base station 10 and one terminal 20 are shown in FIG. 1, this is just an example, and there may be two or more of each.

The base station 10 is a communication device that provides one or more cells and performs wireless communication with the terminal 20. The physical resources of radio signals are given in the time domain and the frequency domain. Time domain resources may be indicated by the number of orthogonal frequency division multiplexing (OFDM) symbols, and frequency domain resources may be indicated by the number of subcarriers or resource blocks. Also, a transmission time interval (TTI) in the time domain may be a slot, or a TTI may be a subframe.

The base station 10 transmits synchronization signals and system information to the terminal 20. The synchronization signals include, for example, NR-PSS and NR-SSS. The system information is transmitted, for example, on NR-PBCH, and is also referred to as "broadcast information." The synchronization signals and system information may be referred to as an "SS/PBCH block" (SSB). Referring to FIG. 1, the base station 10 transmits a control signal or data to the terminal 20 via downlink (DL), and receives a control signal or data from the terminal 20 via uplink (UL). Both the base station 10 and the terminal 20 can transmit and receive signals by using beamforming. Also, both the base station 10 and the terminal 20 can apply multiple-input multiple-output (MIMO) communication to DL or UL. Also, the base station 10 and the terminal 20 may both communicate via a secondary cell (SCell) and a primary cell (PCell) in carrier aggregation (CA). Furthermore, the terminal 20 may communicate via a primary cell of the base station 10 and a primary secondary cell group cell (PSCell: Primary SCG Cell) of another the base station 10 in dual connectivity (DC).

The terminal 20 is a communication device with a wireless communication function, such as a smartphone, a mobile phone, a tablet, a wearable terminal, or a machine-to-machine (M2M) communication module. As shown in FIG. 1, the terminal 20 receives control signals or data from the base station 10 via DL, and transmits control signals or data to the base station 10 via UL, thereby using various communication services provided by the wireless communication system. Also, the terminal 20 receives various reference signals transmitted from the base station 10 and measures the quality of propagation paths based on the result of receiving these reference signals. Note that the terminal 20 may be referred to as a "UE," and the base station 10 may be referred to as a "gNB."

Next, what discussions are taking place in NR Release 18 on power saving of base stations will be explained. Base stations and terminals' techniques for achieving improved network energy efficiency from both perspectives of transmission and reception at base stations are studied. For example, a method of allowing a base station to achieve, more efficiently, adaptation of dynamic and/or semi-static transmission and/or reception at a finer granularity using network energy saving techniques in one or more of the time, frequency, space, and power domains based on potential support/feedback information, as well as potential support information, from the terminals is under study.

### (Problems with Related-Art)

Next, problems with related art will be described.

XR traffic has a tendency that traffic arrives in a cyclical manner depending on FPS. Considering the power consumption of terminals, transmission and reception may be carried out based on a discontinuous PDCCH cycle, CDRX (Connected mode Discontinuous Reception), etc. On the other hand, when a mobile device communicates, the mobile device might communicate in an HST environment, and the quality of radio quality might fall below the normal range thereupon. Potential impacts then include, for example, a deterioration due to increased multipath in a single frequency network (SFN), an impact on terminal reporting cycle and changes in measurement quality, and so forth. In addition, increased retransmissions, a deterioration of MCS, and so forth might be caused.

### (Overview of the present embodiment)

With the present embodiment, an adaptive method for coping with a decrease of radio quality in an HST environment or the like when discontinuous PDCCH reception, CDRX-based communication, and so forth are performed will be described.

A terminal 20 may switch between a PDCCH-related configuration or a DRX-related configuration based on a predetermined condition (for example, when it is determined that the terminal 20 is in an HST environment, a condition related to radio quality, etc.). This makes it possible to make configurations adaptive such that periodic traffic such as XR traffic can be properly received even when the quality of radio decreases during HST or the like.

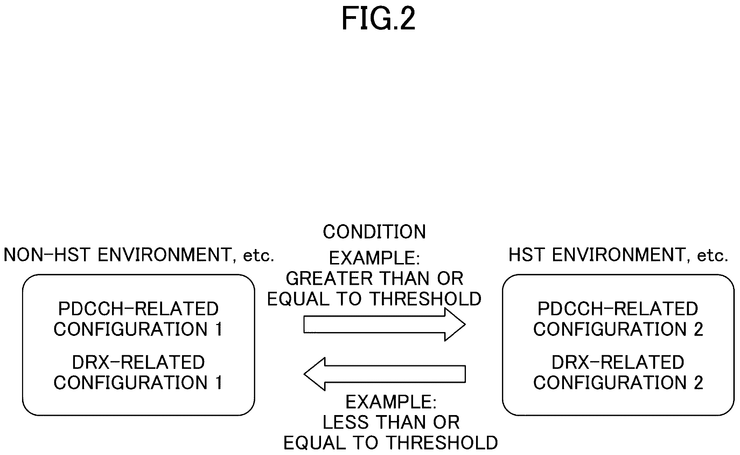

FIG. 2 is a diagram for explaining the switching of configurations according to an embodiment of the present invention. The terminal 20 switches the configurations related to PDCCH, DRX, and so forth when the environment regarding the quality of radio changes, such as when the terminal 20 moves from a non-HST environment to an HST environment or from an HST environment to a non-HST environment.

For example, in a non-HST environment, the PDCCH-related configuration 1 and/or the DRX-related configuration 1 is applied to the terminal 20. Then, if the terminal 20 moves to an HST environment and it is determined that a specific condition is satisfied, the terminal 20 then shifts to the PDCCH-related configuration 2 and/or the DRX-related configuration 2. Also, if the terminal 20 moves to a non-HST environment and it is determined that a specific condition is not satisfied (or a condition that is set apart from that condition is satisfied), the terminal 20 then shifts to the PDCCH-related configuration 1 and/or the DRX-related configuration 1.

To be more specific, the terminal 20 may assume that the following conditions might apply:

### <Example 1>

The condition, for example, may be one that relates to a "highspeed flag." In this case, the terminal 20 may assume that whether or not the condition is satisfied is determined based on whether or not the serving cell's "highspeed flag," which is notified by broadcast information, RRC signaling, etc., is "true."

### <Example 2>

The condition, for example, may be one that relates to doppler magnitude/intensity. In this case, the terminal 20 may assume that whether or not the condition is satisfied is determined based on the result of comparison of the doppler magnitude/intensity against a threshold.

### <Example 3>

The condition, for example, may be one that relates to the speed at which the terminal 20 moves. For example, the terminal 20 may assume that whether or not the condition is satisfied is determined by comparing the speed at which the terminal 20 moves, against a threshold.

### <Example 4>

The condition, for example, may be one that relates to measured quality. For example, the terminal 20 may assume that whether or not the condition is satisfied is determined based on a result of comparison between measured quality (for example, RSRP, RSRQ, SINR, path loss, etc.) and a threshold.

### <Example 5>

The condition, for example, may be one that relates to an error rate (for example, BLER, BER, etc.). For example, the terminal 20 may assume that whether or not the condition is satisfied is determined based on a result of comparison of the magnitude of the error rate against a threshold.

The terminal 20 may control (switch, for example) the DRX-related configuration, for example, as follows:

### <Example 1>

The terminal 20 may switch the configuration of periods referred to as "ON durations" in CDRX mode.

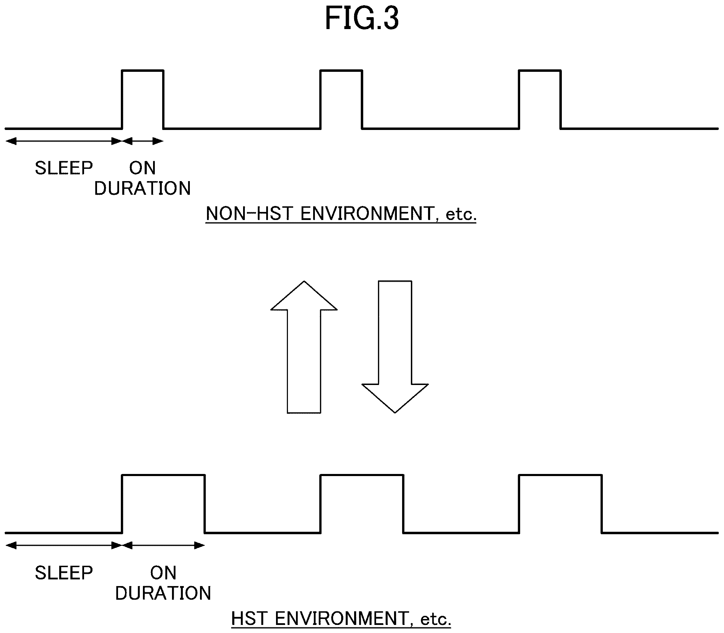

FIG. 3 is a diagram for explaining the switching of the configuration of ON durations in CDRX mode according to an embodiment of the present invention. In a non-HST environment, ON durations for the terminal 20 are configured to be short. When the terminal 20 moves into an environment in which the quality of radio is poor such as an HST environment (that is, if it is determined that a specific condition is satisfied), the terminal 20 may switch to a configuration that provides long ON durations.

### <Example 2>

The terminal 20 may switch the configuration of cycle in CDRX mode ("CDRX cycle," etc.). For example, when moving into an environment in which the quality of radio is poor such as an HST environment, the terminal 20 may switch to a configuration in which the cycle ("CDRX cycle," etc.) is shorter (and recurs more frequently). Also, the terminal 20 may switch between a configuration with a longer cycle and a configuration with a shorter cycle.

### <Example 3>

The terminal 20 may switch the configuration of "drx-InactivityTimer" in CDRX mode. For example, when the terminal 20 moves to an environment in which the quality of radio is poor such as an HST environment, the terminal 20 may switch to a configuration in which "drx-InactivityTimer" is longer.

### <Example 4>

The terminal 20 may switch the configuration of various timers taking into account the retransmissions in CDRX mode. For example, when the terminal 20 moves to an environment in which the quality of radio is poor such as an HST environment, the terminal 20 may switch to a configuration in which a timer related to retransmission is set longer. For example, timers such as "drx-RetransmissionTimerDL," "drx-RetransmissionTimerUL," "drx-HARQ-RTT-TimerDL," and "drx-HARQ-RTT-TimerUL" may be subject to switching by the terminal 20.

### <Example 5>

The terminal 20 may switch the configuration related to a wake-up signal (WUS) in CDRX mode. For example, when the terminal 20 moves to an environment in which the quality of radio is poor such as an HST environment, the terminal 20 may switch the configuration for controlling whether or not to carry out WUS monitoring, the default operation to be performed when a WUS cannot be received properly, and so forth.

Also, the terminal 20 may switch PDCCH-related configurations as follows.

### <Example 1>

The terminal 20 may switch the configuration of the PDCCH monitoring cycle. For example, when the terminal 20 moves to an environment in which the quality of radio is poor such as an HST environment, the terminal 20 may switch to a configuration with a longer PDCCH monitoring cycle.

### <Example 2>

The terminal 20 may switch the configuration of the aggregation level (AL) in PDCCH monitoring. For example, when the terminal 20 moves to an environment in which the quality of radio is poor such as an HST environment, the terminal 20 may switch to a configuration with a lower AL.

### <Example 3>

The terminal 20 may switch the active BWP (that is, perform BWP switching). For example, when the terminal 20 moves to an environment in which the quality of radio is poor such as an HST environment, the terminal 20 may switch its active BWP from BWP #1 to BWP #2.

### <Example 4>

The terminal 20 may switch the search space set group (that is, perform search space set group switching). For example, when the terminal 20 moves to an environment in which the quality of radio is poor such as an HST environment, the terminal 20 may switch the search space set group from "search space set group #1" to "search space set group #2."

### <Example 5>

The terminal 20 may switch the configuration related to the type or the number of DCI formats to be monitored. For example, when the terminal 20 moves to an environment in which the quality of radio is poor such as an HST environment, the terminal 20 may switch the DCI format to be monitored to another DCI format or increase the number of DCI formats to be monitored.

Also, the terminal 20 may assume that the above-described conditions are set forth in the technical specifications, that they are RRC-configured from the base station 10 as thresholds or other conditions, or that they are indicated by MAC-CE, DCI, etc.

The terminal 20 may report, to the base station 10, information indicating the terminal capabilities of whether or not the terminal 20 supports the above-described configuration switching, and assume that rules, configurations, commands, and so forth are prepared based on the terminal capabilities reported from the terminal 20.

The terminal 20 may switch one or multiple configurations based on one or multiple conditions.

For example, the terminal 20 may be configured to switch a configuration A when a condition A is satisfied and switch a configuration B when a condition B is satisfied.

Also, in the terminal 20, thresholds may be set in two steps in the condition A. In this case, the terminal 20 may switch to the configuration A based on the result of comparison with the first threshold, and switch to the configuration B based on the result of comparison with the second threshold.

Also, the terminal 20 may be switched to the configuration A when the condition A and the condition B are both satisfied.

Also, the terminal 20 may be switched to both the configuration A and the configuration B when the condition A is satisfied.

The types of conditions that the terminal 20 supports may be defined as terminal capabilities, or information that indicates the terminal capabilities may be reported to the base station 10.

Also, the DRX-related configurations and/or the PDCCH-related configurations that the terminal 20 supports may be defined as terminal capabilities, or information that indicates the terminal capabilities may be reported to the base station 10.

Also, the terminal 20 may report the results of determining whether the above-described conditions are satisfied, to the base station 10. Based on the results determined and reported thus, the base station 10 may assume that configuration switching has taken place.

### (Device structure)

Next, example functional structures of the base station 10 and the terminal 20 for performing the processes and operations described above will be described.

### <Base station 10>

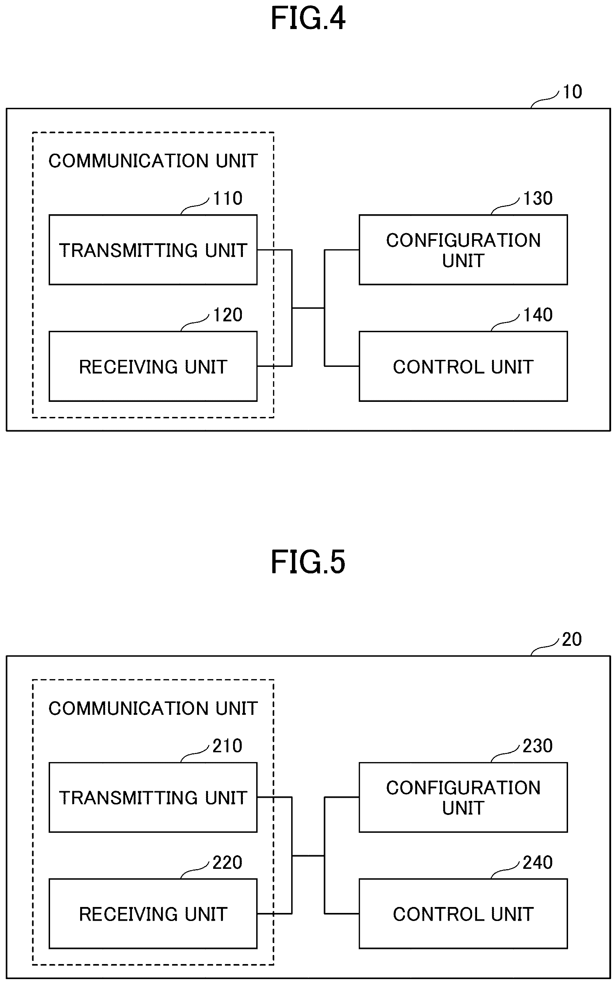

FIG. 4 is a diagram that illustrates an example functional structure of the base station 10. As illustrated in FIG. 4, the base station 10 includes a transmitting unit 110, a receiving unit 120, a configuration unit 130, and a control unit 140. The functional structure illustrated in FIG. 4 is only one example. If the operation according to the embodiments of the present invention can be performed, any functional categories and any functional unit names may be used. The transmitting unit 110 and the receiving unit 120 may be referred to as a "communication unit."

The transmitting unit 110 includes a function for generating signals to be transmitted to the terminal 20 side and transmitting the signals wirelessly. The receiving unit 120 includes a function of receiving various signals transmitted from the terminal 20 and acquiring, for example, higher layer information from the received signals. Also, the transmitting unit 110 has a function to transmit NR-PSS, NR-SSS, NR-PBCH, DL/UL control signals, PDCCH DCI, PDSCH data, and so forth, to the terminal 20.

The configuration unit 130 stores preset configuration information and various pieces of configuration information to be transmitted to the terminal 20, in a storage device provided in the configuration unit 130, and reads the information from the storage device when necessary.

The control unit 140 schedules DL reception or UL transmission for the terminal 20 via the transmitting unit 110. Also, the control unit 140 has a function to perform LBT. Functional units in the control unit 140 that pertain to transmission of signals may be included in the transmitting unit 110, and functional units in the control unit 140 that pertain to reception of signals may be included in the receiving unit 120. Also, the transmitting unit 110 may be referred to as a "transmitter," and the receiving unit 120 may be referred to as a "receiver."

### <Terminal 20>

FIG. 5 is a diagram that illustrates an example functional structure of the terminal 20. As illustrated in FIG. 5, the terminal 20 includes a transmitting unit 210, a receiving unit 220, a configuration unit 230, and a control unit 240. The functional structure illustrated in FIG. 5 is only one example. Insofar as the operations according to the embodiments of the present invention can be performed, any functional categories and functional unit names may be used. The transmitting unit 210 and the receiving unit 220 may be collectively referred to as a "communication unit."

The transmitting unit 210 creates transmitting signals from transmission data and transmits the transmitting signals wirelessly. The receiving unit 220 wirelessly receives various signals and obtains higher layer signals from the physical layer signals received. In addition, the receiving unit 220 has a function to receive NR-PSS, NR-SSS, NR-PBCH, DL/UL/SL control signals, DCI on PDCCH, data on PDSCH, and so forth transmitted from the base station 10. Also, for example, in D2D communication, the transmitting unit 210 may transmit PSCCH (Physical Sidelink Control CHannel), PSSCH (Physical Sidelink Shared CHannel), PSDCH (Physical Sidelink Discovery CHannel), PSBCH (Physical Sidelink Broadcast CHannel), etc., to other terminal 20. The receiving unit 120 may receive PSCCH, PSSCH, PSDCH, PSBCH, and so forth from other terminals 20.

The configuration unit 230 stores various configuration information received by the receiving unit 220 from the base station 10 or from other terminals, in a storage device provided in the configuration unit 230, and reads the information from the storage device when necessary. The configuration unit 230 also stores configuration information that is set in advance. The control unit 240 controls the terminal 20. Also, the control unit 240 has a function to performing LBT.

According to the herein-contained embodiments, a terminal may be structured in any of the following structures. Also, the following communication method may be executed.

### <Structures according to present embodiment>

### (First example)

A terminal including:
a receiving unit configured to receive a downlink signal based on discontinuous reception or cyclical monitoring of a downlink control signal; and
a control unit configured to switch a configuration of the discontinuous reception or the cyclical monitoring when a condition related to quality of wireless communication is satisfied.

### (Second example)

The terminal according to the first example, further including a transmitting unit configured to transmit, on an uplink, information that indicates a terminal capability, the terminal capability indicating whether or not the terminal supports configuration switching, in which the control unit may assume that the condition related to the quality of wireless communication is configured or indicated based on a terminal capability reported.

### (Third example)

The terminal according to the first example, in which the control unit switching one or a plurality of configurations based on one or a plurality of conditions.

### (Fourth example)

A base station including:
a transmitting unit configured to transmit a downlink signal to a terminal based on discontinuous reception or cyclical monitoring of a downlink control signal; and
a control unit configured to assume that the terminal switches a configuration of the discontinuous reception or the cyclical monitoring when a condition related to quality of wireless communication is satisfied.

### (Fifth example)

A communication method to be implemented by a terminal, the method including:
a step of receiving a downlink signal based on discontinuous reception or cyclical monitoring of a downlink control signal; and
a step of switching a configuration of the discontinuous reception or the cyclical monitoring when a condition related to quality of wireless communication is satisfied.

Any one of the examples set forth above provides a technique that allows, in a wireless communication system, a terminal to communicate well in an environment in which the quality of radio is poor, and save its power consumption at the same time. According to the first example, when a condition related to the quality of wireless communication is satisfied, the configuration of the cycle of discontinuous reception or cyclical downlink control signal monitoring can be switched. According to the second example, it is possible to assume that a condition related to the quality of wireless communication is configured or indicated based on terminal capabilities reported. According to the third example, one or multiple configurations can be switched based on one or multiple conditions.

### (Hardware structure)

The block diagrams (FIG. 4 and FIG. 5) used in the description of the above embodiments illustrate blocks of functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, assumption, deeming, broadcasting, notifying, communicating, forwarding, configuring, reconfiguring, allocating, mapping, and assigning. For example, a functional block (component) that performs a transmission function is referred to as a "transmitting unit" or a "transmitter." In either case, as described above, the method of implementation is not particularly limited.

For example, the base station 10, the terminal 20, and so forth according to the embodiments of the present disclosure may function as a computer for processing the wireless communication method of the present disclosure. FIG. 10 is a diagram that illustrates an example hardware structure of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuit, apparatus, unit, and so forth. The hardware structure of the base station 10 and the terminal 20 may be configured to include one or more of the devices illustrated in the drawings, or may be configured without some of the devices.

The functions of the base station 10 and the terminal 20 are realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operations described in the above embodiments may be used. For example, the control unit 140 of the base station 10 illustrated in FIG. 8 may be stored in the storage device 1002 and implemented by control programs that operate on the processor 1001. For example, the control unit 240 of the terminal 20 illustrated in FIG. 9 may be stored in the storage device 1002 and implemented by control programs that operate on the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 is a computer-readable recording medium and may be composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiments of the present disclosure.

The auxiliary storage device 1003 is a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network, and is also referred to as a "network device," a "network controller," a "network card," a "communication module," or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented by using at least one of these hardware components.

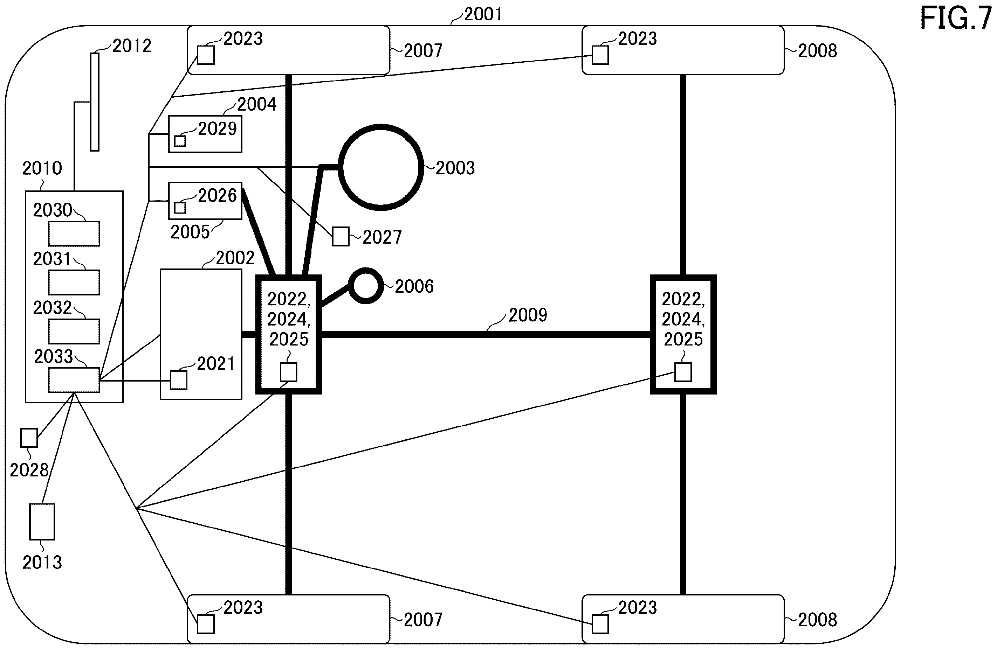

FIG. 7 shows an example structure of a vehicle 2001. As shown in FIG. 7, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The embodiments and examples described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the sensors 2021 to 2029 provided in the vehicle 2001. The electronic control unit 2010 may be referred to as an "electronic control unit" (ECU).

The signals from the sensors 2021 to 2029 include a current signal from a current sensor 2021 that senses the current of the motor, a front or rear wheel rotation speed signal acquired by a rotation speed sensor 2022, a front or rear wheel air pressure signal acquired by an air pressure sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, a shift lever operation signal acquired by a shift lever sensor 2027, and a detection signal, acquired by an object detection sensor 2028, for detecting an obstacle, a vehicle, a pedestrian, and the like.

The information service unit 2012 includes various devices for providing various information such as driving information, traffic information, and entertainment information, including a car navigation system, an audio system, a speaker, a television, and a radio, and one or more ECUs that control these devices. The information service unit 2012 provides various multimedia information and multimedia services to the occupants of the vehicle 2001 by using information obtained from external devices through the communication module 2013 or the like.

The information service unit 2012 may include an input device (for example, a keyboard, a mouse, a microphone, a switch, a button, a sensor, a touch panel, etc.) that accepts external inputs, and may also include an output device (for example, a display, a speaker, an LED lamp, a touch panel, etc.) that executes external outputs.

A driver assistance system unit 2030 includes: various devices for providing functions of preventing accidents and reducing the driver's burden of driving, such as a millimeter wave radar, a light detection and ranging (LiDAR) system, a camera, a positioning locator (for example, GNSS), map information (for example, high definition (HD) map, autonomous vehicle (AV) map, etc.), a gyro system (for example, an inertial measurement unit (IMU), an inertial navigation system (INS), etc.), an artificial intelligence (AI) chip, and an AI processor; and one or more ECUs that control these devices. In addition, the driver assistance system unit 2030 transmits and receives various information via the communication module 2013 to implement a driver assistance function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM) 2032 in the electronic control unit 2010, and the sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through wireless communication. The communication module 2013 may be internal or external to the electronic control unit 2010. The external devices may include, for example, a base station, a mobile station, or the like.

The communication module 2013 may transmit at least one of: signals input to the electronic control unit 2010 from the sensors 2021 to 2029; information obtained based on these signals; and information based on inputs from the outside (user) obtained via the information service unit 2012, to external devices via wireless communication. The electronic control unit 2010, the sensors 2021 to 2029, the information service unit 2012, and the like may be referred to as an "input unit" that accepts inputs. For example, PUSCH transmitted by the communication module 2013 may include information that is based on an input such as one described above.

The communication module 2013 receives various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on PDSCH (or data/information decoded from PDSCH) received by the communication module 2013).

In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Notes on embodiments)

Example embodiments of the present invention have been described above, but the disclosed invention is not limited to the above embodiments, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of multiple functional units may be performed physically by one component, or an operation of one functional unit may be physically performed by multiple parts. In the processing procedures described in the embodiments, the order of the processes may be changed as long as there is no contradiction. For the sake of convenience of processing description, the base station 10 and the terminal 20 are described using functional block diagrams, but such devices may be implemented by hardware, software, or a combination of these. Software executed by the processor included in the base station 10 according to the embodiments of the present invention and software executed by the processor included in the terminal 20 according to the embodiments of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, notification of information is not limited to the embodiments or examples described in the present disclosure, and may be provided by using any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each embodiment and example described in the present disclosure may be applied to at least one of long-term evolution (LTE), LTE-advanced (LTE-A), SUPER 3G, IMT-Advanced, 4th generation mobile communication system (4G), 5th generation mobile communication system (5G), 6th generation mobile communication system (6G), x-th generation mobile communication system (xG) (where "x" is an integer, decimal, etc.), future radio access (FRA), new radio (NR), new radio access (NX), future generation radio access, W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced, modified, created, and defined based on these standards. Furthermore, multiple systems (for example, a combination of at least one of LTE and LTE-A, with 5G) may be combined to be applied.

The order of the processing procedures, the order of the sequences, the order of the flowcharts, and the like of the respective embodiments and examples described in this specification may be changed, provided that there is no contradiction. For example, the method described in the present disclosure presents elements of various steps with an example order and is not limited to the presented, specific order.

In this specification, a specific operation to be performed by the base station 10 may be performed by its upper node in some cases. In a network including one or more network nodes including the base station 10, various operations performed for communication with the terminal 20 can be obviously performed by at least one of the base station 10 and any network node (for example, an MME, an S-GW, and so forth, but these are by no means limiting) other than the base station 10. Cases have been shown above in which there is one network node other than the base station 10. The one network node may be a combination of multiple other network nodes (for example, MME and S-GW).

Information, a signal, or the like described in the present disclosure may be output from a higher layer to a lower layer (or from a lower layer to a higher layer). Information, a signal, or the like described in the present disclosure may be input and output via multiple network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software," "firmware," "middleware," a "microcode," a "hardware description language," or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of these wired technology and radio technology is included in a definition of a transmission medium.

Information, signals, and the like described in the present disclosure may be expressed using any one of a variety of techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency," a "cell," a "frequency carrier," or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, radio resources may be indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term such as a "macrocell," a "small cell," a "femtocell," and a "picocell."

The base station can accommodate one or more (for example, three) cells. In a case in which the base station accommodates multiple cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, when a base station transmits information to a terminal, this may be interpreted as meaning that the base station controls or sends a command to the terminal based on the information.

In the present disclosure, the terms "mobile station (MS)," "user terminal," "user equipment (UE)," "terminal," and the like can be used interchangeably.

The mobile station may be referred to, by a person ordinarily skilled in the art, as a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client," or some other suitable terms.

At least one of the base station and the mobile station may be also referred to as a "transmission device," a "receiving device," a "communication device," or the like. At least one of the base station and the mobile station may be a device installed in a mobile body, a mobile body itself, or the like. The mobile body may be a vehicle (for example, a car, an airplane, etc.), an unmanned body that moves (for example, a drone, an autonomous car or the like), or a robot (manned type or unmanned type). At least one of the base station and the mobile station includes a device that need not move during communication operation. For example, at least one of the base station and the mobile station may be an Internet of things (IoT) device such as a sensor.

Furthermore, the base station in the present disclosure may be replaced by the user terminal. For example, various embodiments and examples of the present disclosure may be applied to a configuration in which communication between the base station and the user terminal is replaced by communication between multiple terminals 20 (such communication may be referred to as "device-to-device (D2D)" communication, "vehicle-to-everything (V2X)" communication, etc.). In this case, the terminals 20 may have and perform the functions that the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging," "calculating," "computing," "processing," "deriving, " "investigating," "looking up (for example, searching in a table, a database, or another data structure)," "searching," "inquiring," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

The terms "connected," "coupled," or variations thereof may mean any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as non-limiting and non-exhaustive examples.

A reference signal may be abbreviated as "RS" and may be referred to as a "pilot," depending on the standard that is applied.

The phrase "based on" used in the present disclosure does not only mean "based only on," unless otherwise stated. In other words, the phrase "based on" means both "based only on" and "based at least on."

Any reference to an element using a designation such as "first" or "second," used in the present disclosure, does not generally restrict quantities or the order of those elements. Such designation can be used in the present disclosure as a convenient method of distinguishing between two or more elements. Thus, reference to the first and second elements does not mean that only two elements can be adopted there or that the first element must precede the second element in a certain way.

Furthermore, "means" in the structure of each of the above devices may be replaced with "unit," "part," "circuit," "device," or the like.

When "include," "including," and variations thereof are used in the present disclosure, these terms are intended to be comprehensive, similar to the term "provided with (comprising)." Furthermore, the term "or" used in the present disclosure is intended not to be an exclusive OR.

A radio frame may include one or more frames in the time domain. In the time domain, each of one or more frames may be referred to as a "subframe." The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot." A mini slot may include fewer symbols than a slot. PDSCH (or PUSCH) that is transmitted in a unit of time greater than a mini slot may be referred to as "PDSCH (or PUSCH) mapping type A." PDSCH (or PUSCH) that is transmitted using a mini slot may be referred to as "PDSCH (or PUSCH) mapping type B."

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a "transmission time interval (TTI)," or a plurality of consecutive subframes may be referred to as a "TTI," or one slot or one mini slot may be referred to as a "TTI." In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot," a "mini slot," or the like, instead of a "subframe."

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a "TTI," one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI," a "long TTI," a "common subframe," a "normal subframe," a "long subframe," a "slot," or the like. A TTI shorter than a common TTI may be referred to as a "reduced TTI," a "short TTI," a "partial TTI" (a partial or fractional TTI), a "reduced subframe," a "short subframe," a "mini slot," a "sub slot," a "slot," or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time range of an RB may include one or more symbols and may have a length of one slot, one mini slot, one subframe, or one TTI. One TTI, one subframe, or the like may be formed with one or more resource blocks.

Furthermore, one or more RBs may be referred to as a "physical resource block (PRB)," a "subcarrier group (SCG)," a "resource element group (REG)," a "PRB pair," an "RB pair," or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). In the terminal 20, one or more BWPs may be configured in one carrier.

At least one of configured BWPs may be active, and the terminal 20 need not assume that predetermined signals/channels are transmitted and received outside an active BWP. Furthermore, a "cell," a "carrier," or the like in the present disclosure may be replaced with a "BWP."

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, "A and B are different" may mean "A and B are different from each other." However, this may also mean "A and B are different from C." Terms such as "separated" or "combined" may be interpreted as well as "different."

Each embodiment or example described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Although the present disclosure has been described above in detail, it is obvious to those skilled in the art that the present disclosure is not limited to the embodiments described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### DESCRIPTION OF THE REFERENCE NUMERALS

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driver assistance system unit
- 2031: microprocessor
- 2032: memory (ROM, RAM)
- 2033: communication port (IO port)

## Claims

1. A terminal comprising:
a receiving unit configured to receive a downlink signal based on discontinuous reception or cyclical monitoring of a downlink control signal; and
a control unit configured to switch a configuration of the discontinuous reception or the cyclical monitoring when a condition related to quality of wireless communication is satisfied.

2. The terminal according to claim 1, further comprising a transmitting unit configured to transmit, on an uplink, information that indicates a terminal capability, the terminal capability indicating whether or not the terminal supports configuration switching,
wherein the control unit assumes that the condition related to the quality of wireless communication is configured or indicated based on the terminal capability reported.

3. The terminal according to claim 1, wherein the control unit switches one or a plurality of configurations based on one or a plurality of conditions.

4. A base station comprising:
a transmitting unit configured to transmit a downlink signal to a terminal based on discontinuous reception or cyclical monitoring of a downlink control signal; and
a control unit configured to assume that the terminal switches a configuration of the discontinuous reception or the cyclical monitoring when a condition related to quality of wireless communication is satisfied.

5. A communication method to be implemented by a terminal, the method comprising:
a step of receiving a downlink signal based on discontinuous reception or cyclical monitoring of a downlink control signal; and
a step of switching a configuration of the discontinuous reception or the cyclical monitoring when a condition related to quality of wireless communication is satisfied.
